# EUROPÄISCHE PATENTSCHRIFT

(11) **EP 2 095 303 B1**
(45) Veröffentlichungstag und Bekanntmachung des Hinweises auf die Patenterteilung: **13.06.2012**
(21) Anmeldenummer: 07819306.7
(22) Anmeldetag: 25.10.2007
(51) Int. Cl.: G06K 19/077

(54) **TRANSPONDEREINHEIT**
TRANSPONDER UNIT
UNITÉ DE TRANSPONDEUR

(30) Priorität: 16.11.2006 DE 102006054449
(43) Veröffentlichungstag der Anmeldung: 02.09.2009
(73) Patentinhaber: Smartrac IP B.V., 1077 XX Amsterdam (NL)
(72) Erfinder: RIETZLER, Manfred, 87616 Marktoberdorf (DE); SCHNEIDER, Wolfgang, 74423 Obersontheim (DE)
(74) Vertreter: Tappe, Hartmut
(86) Internationale Anmeldenummer: PCT/EP2007/009254
(87) Internationale Veröffentlichungsnummer: WO 2008/058616

(56) Entgegenhaltungen:
- EP-A- 0 913 268
- EP-A- 1 310 386
- EP-A- 1 454 770
- EP-A- 1 547 824
- WO-A-2005/074071
- US-A1- 2003 160 732
- US-B1- 6 271 793

## Beschreibung

Die Erfindung betrifft eine Transpondereinheit für Transponderkarten mit zumindest einem Chip und zumindest einer Antenne, wobei die Antenne aus einem Verbundleiter gebildet ist, der auf einem Antennensubstrat angeordnet und mit diesem fest verbunden ist.

Transpondereinheiten der eingangs genannten Art sind hinlänglich bekannt und finden regelmäßig bei der Herstellung von Transponderkarten, Identifikationsdokumenten, Wertkarten oder dergleichen Verwendung. Bei den aus dem Stand der Technik bekannten Transpondereinheiten dient das Antennensubstrat als Träger für die Antenne und den mit der Antenne kontaktierten Chip, wobei die Antenne und der Chip mit dem Substrat fest verbunden sind. Die Antenne besteht im Wesentlichen aus Reinkupfer und wird durch galvanische Verfahren als Leiterbahn oder als Draht in Drahtverlegetechnik auf dem Antennensubstrat ausgebildet. Wird ein Kupferdraht verwendet, kann dieser auch mit Backlack beschichtet sein, welcher eine gute Verbindung mit dem Antennensubstrat sowie ein Verlegen des Drahtes überkreuz ermöglicht. Derart ausgebildete Transpondereinheiten werden in der Regel zwischen mehreren Decklagen aufgenommen und mit diesen zu einer Transponderkarte laminiert. Identifikationsdokumente mit in Drahtverlegetechnik hergestellten Transpondereinheiten sind unter anderem aus der DE 103 38 444 A1 und der DE 10 2004 004 469 A1 bekannt.

Identifikationsdokumente und Wertkarten, wie z. B. Ausweise, Pässe, Bank- und Kreditkarten, werden regelmäßig von Personen mitgeführt und neben ihrer bestimmungsgemäßen Verwendung in Portmonees, Brieftaschen oder dergleichen dauerhaft aufbewahrt. Da Portmonees und Brieftaschen aufgrund ihrer Werthaltigkeit vorzugsweise in Kleidungsstücken am Körper, z. B. in einer Gesäßtasche, getragen werden, werden die darin aufbewahrten Transponderkarten, bedingt durch fortwährende Körperbewegungen, z. B. beim Sitzen, hohen und wechselnden Biege-und Torsionsbeanspruchungen ausgesetzt. Da der Lagenaufbau der Karte üblicherweise aus vergleichsweise gut dehnbaren Kunststoffmaterialen oder Kunststoffverbundmaterialen besteht, ist eine zwischen den Lagen angeordnete metallische Antenne bei einer Biegung der Transponderkarte, je nach Position der Antenne zur Biegelinie der Transponderkarte, hohen Zug-, Druck- oder Biegespannungen ausgesetzt. Derartige Beanspruchungen können, neben einer mechanischen Beanspruchung der Transponderkarte im Rahmen ihrer bestimmungsgemäßen Verwendung, zu einem Bruch der Antenne führen.

Aus der EP 0 913 268 A1 ist eine Transponderkarte mit einem Chip und einer Antenne bekannt, wobei die Antenne in der ein Antennensubstrat ausbildenden Karte fest aufgenommen ist. Ein Leiter der Antenne kann mit einer isolierenden Mantelschicht aus einem Harz, einer Mantelschicht aus Gold oder mit einem Lotmaterial beschichtet sein.

Die US 6,271,793 B1 beschreibt eine Transpondereinheit mit einer flexiblen Antenne. Die flexible Antenne kann aus leitenden Partikeln in einer Matrix, aus einem Polymer bzw. aus Kupferpartikeln mit einer Silberbeschichtung gebildet sein. Weiter ist vorgesehen, die Antenne der Transpondereinheit mittels Ätztechnik auszubilden.

Der vorliegenden Erfindung liegt daher die Aufgabe zugrunde, eine Transpondereinheit vorzuschlagen, bei der das durch eine Biege- und Torsionsbeanspruchung einer Transponderkarte beeinflusste Bruchverhalten einer Antenne gegenüber den aus dem Stand der Technik bekannten Antennen verbessert wird.

Diese Aufgabe wird durch eine Transpondereinheit mit den Merkmalen des Anspruchs 1 gelöst.

Die erfindungsgemäße Transpondereinheit mit der Merkmalen des Anspruchs 1 einen Leiter auf, der mit einer stoffschlüssig mit dem Leiter verbundenen Struktureinrichtung zur Ausbildung eines Verbundleiters versehen ist, derart, dass der Verbundleiter gegenüber dem Leiter eine erhöhte Zugfestigkeit aufweist. Die Transpondereinheit kann so in vorteilhafter Weise Biege- und Torsionsbeanspruchungen durch die mit der Transpondereinheit verbundene Antenne aufnehmen. Die Bruchfestigkeit der Antenne ist durch die erhöhte ertragbare mechanische Zugspannung des Verbundleiters gegenüber einer Antenne mit einem herkömmlichen Leiter wesentlich verbessert.

-Weiter weist Verbundleiter gegenüber dem Leiter eine erhöhte mechanische Bruchdehnung auf. Aus der erhöhten mechanischen Bruchdehnung ergibt sich ein erhöhtes elastisches bzw. plastisches Verformungsvermögen bei einer Zugbeanspruchung des Verbundleiters. Ein derartiger Verbundleiter ist relativ dehnbarer gegenüber einem herkömmlichen Leiter, so dass eine Transpondereinheit mit einer Antenne, welche aus einem derartigen Verbundleiter ausgebildet ist, vergleichsweise biegbarer ist als eine Transpondereinheit mit einer herkömmlichen Antenne. Einer Formänderung der Transpondereinheit aufgrund von Biege- und Torsionsbeanspruchungen steht damit ein vergleichsweise geringer Widerstand entgegen, so dass der Bruch einer Antenne in vorteilhafter Weise vermeidbar ist.

Als besonders vorteilhaft erweist sich, wenn die Struktureinrichtung des Leiters im Wesentlichen aus zumindest einem metallischen Werkstoff besteht. So kann eine gute stoffschlüssige Verbindung zwischen dem metallischen Leiter und der Struktureinrichtung bzw. mehreren metallischen Werkstoffen, welche die Struktureinrichtung ausbilden können, einfach ausgebildet werden.

In einer weiteren Ausführungsform kann die Struktureinrichtung des Leiters zumindest ein Legierungsbestandteil des Leiters sein. So ist die Ausbildung eines Verbundleiters mit der Struktureinrichtung in einem Teilchenverbund bzw. aus einem legierten Werkstoff einfach möglich. Der zur Legierung des Leiters verwendete Werkstoff kann metallisch oder nichtmetallisch sein bzw. verschiedene Materialkomponenten aufweisen.

Wenn die Struktureinrichtung des Leiters nicht gemäß der Erfindung zumindest eine Mantelschicht des Leiters ist, kann ein Verbundleiter einfach durch Aufschmelzen oder galvanisches Auftragen eines metallischen Werkstoffes auf den Leiter ausgebildet werden. Auch kann die Mantelschicht aus einem nichtmetallischen Werkstoff oder Werkstoffverbund ausgebildet sein, welcher den Leiter umgibt und dessen mechanische Eigenschaften in gewünschter Weise beeinflusst.

Als besonders vorteilhaft erweist es sich gemäß der Erfindung, wenn die Mantelschicht des Leiters durch Diffusion ausgebildet ist. Ist der Leiter mit einem metallischen Werkstoff beschichtet, kann durch Diffusionsglühen eine Mantelschicht des Leiters ausgebildet werden, die beispielsweise durch einen kontinuierlichen oder einen in Teilen der Mantelschicht gleichmäßigen Übergang zwischen dem metallischen Werkstoff und dem Werkstoff des Leiters gekennzeichnet ist.

Die vorteilhaften Eigenschaften eines Seils bzw. einer Litze hinsichtlich Biegung und Zugfestigkeit sind für einen Leiter nutzbar, wenn die Struktureinrichtung des Leiters aus einer Litze oder einem Seil gebildet ist. Das Seil bzw. die Litze kann als Seele des Leiters ausgebildet sein, wobei der Leiter auf das Seil bzw. die Litze aufgeschmolzen ist. In weiteren Ausführungsformen kann das Seil bzw. die Litze den Leiter vollständig oder teilweise umgeben.

Eine einfache Ausbildung eines Verbundleiters unabhängig von einem Antennensubstrat ist dann möglich, wenn der Leiter als Draht ausgebildet ist. Ein Verbundleiter ist so vor einer Verbindung mit dem Antennensubstrat ausbildbar, wodurch die Herstellung des Verbundleiters wesentlich vereinfacht wird.

In einer Ausführungsform kann der Leiter als eine vermittels Ätztechnik ausgebildete Beschichtung eines Antennensubstrats ausgebildet sein. So ist eine Ausbildung des Verbundleiters bei gleichzeitiger Verbindung mit dem Antennensubstrat einfach möglich, ohne dass nach Ausbildung des Verbundleiters eine Verbindung zwischen Antennensubstrat und Verbundleiter hergestellt werden müsste.

Nachfolgend werden bevorzugte Ausführungsformen der Erfindung und des Stands der Technik unter Bezugnahme auf die beigefügte Zeichnung näher erläutert.

Es zeigen:
- **Fig. 1:**: eine Transpondereinheit in einer Draufsicht;
- **Fig. 2:**: eine Schnittansicht der Transpondereinheit entlang einer Linie II-II aus **Fig. 1** mit einer Decklage;
- **Fig. 3:**: eine erste Ausführungsform eines Verbundleiters gemäß der Erfindung im Querschnitt;
- **Fig. 4:**: eine Ausführungsform eines Verbundleiters nach dem Stand der Technik im Querschnitt;
- **Fig. 5:**: eine zweite Ausführungsform eines Verbundleiters gemäß der Erfindung im Querschnitt;
- **Fig. 6:**: eine dritte Ausführungsform eines Verbundleiters gemäß der Erfindung im Querschnitt;
- **Fig. 7:**: eine vierte Ausführungsform eines Verbundleiters gemäß der Erfindung im Querschnitt;
- **Fig. 8:**: eine weitere Ausführungsform eines Verbundleiters nach dem Stand der Technik im Querschnitt;
- **Fig. 9:**: eine fünfte Ausführungsform eines Verbundleiters gemäß der Erfindung im Querschnitt.

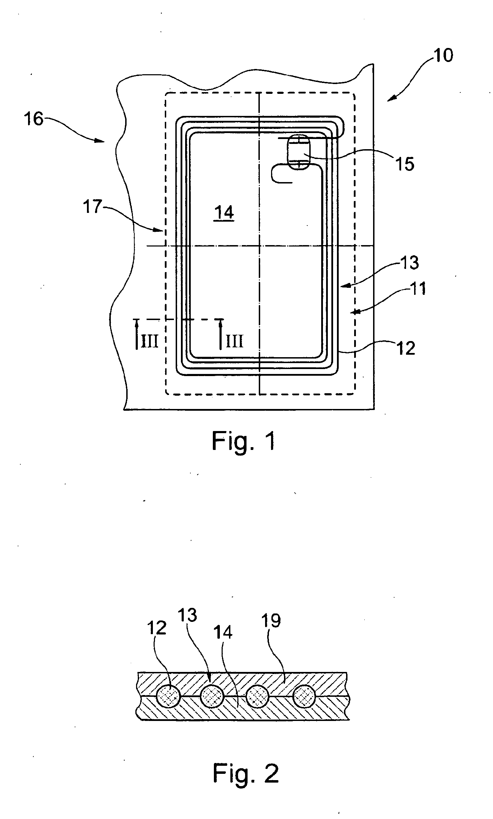

**Fig. 1** zeigt eine Transpondereinheit 10 mit einer Antenne 11, welche aus einem Verbundleiter 12 ausgebildet ist. Der Verbundleiter 12 ist mit einer Mehrzahl von Windungen 13 auf einem Antennensubstrat 14 in Drahtverlegetechnik verlegt und mit dem Antennensubstrat 14 verbunden. Weiter ist der Verbundleiter 12 mit einem Chip 15, welcher sich auf dem Antennensubstrat 14 befindet, kontaktiert. Das Antennensubstrat 14 liegt in der gezeigten Darstellung in Form eines Nutzenbogens 16 zur Herstellung einer Mehrzahl von Transponderkarten vor, aus dem in einem späteren Arbeitsschritt Transponderkarten, mit der hier als gestrichelte Linie dargestellten Kontur 17, vereinzelt werden. Eine die Transpondereinheit 10 abdeckende Decklage ist in dieser Ansicht nicht dargestellt.

Aus einer Zusammenschau der **Fig. 1** und **Fig. 2** wird der prinzipielle Aufbau einer hier nicht näher dargestellten Transponderkarte deutlich. **Fig. 2** zeigt eine Schnittansicht entlang einer Linie II-II aus **Fig. 1**, mit Windungen 13 des Verbundleiters 12 auf dem Antennensubstrat 14. Das Antennensubstrat 14 und die Windungen 13 sind mit einer Decklage 19 zur Ausbildung einer Transponderkarte mit der Transpondereinheit 10 durch beispielsweise Laminiertechnik fest verbunden. Zur Ausbildung einer Transponderkarte können weitere, hier nicht gezeigte Decklagen auf das Antennensubstrat 14 und die Decklage 19 aufgebracht werden.

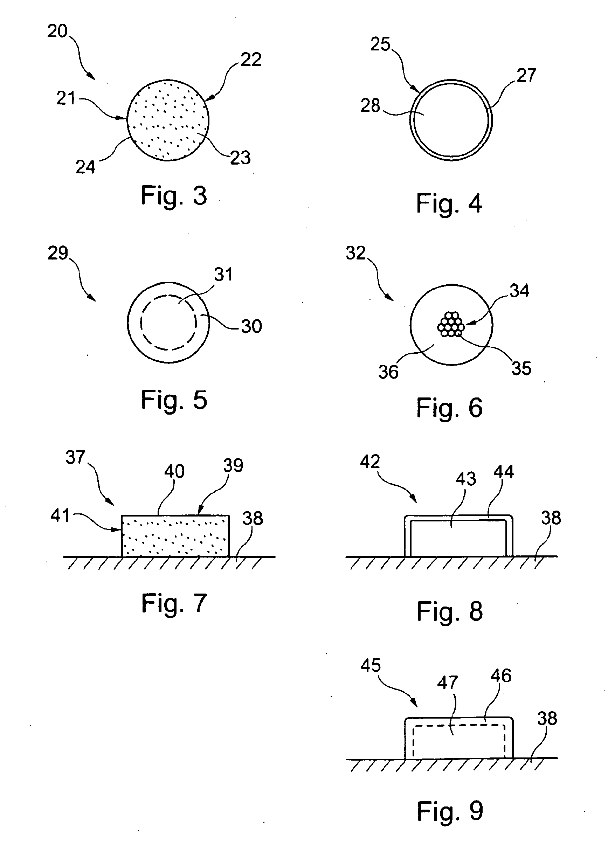

**Fig. 3** zeigt in einer ersten Ausführungsform einen Verbundleiter 20 im Querschnitt. Der Verbundleiter 20 ist mit einem Kreisquerschnitt 21 ausgebildet und weist eine Struktureinrichtung 22 auf, bestehend aus Teilchen 23 eines Legierungsstoffes in einem stoffschlüssigen Teilchenverbund mit dem metallischen Leiter 24. Je nach Auswahl des Legierungsstoffes kann beispielsweise der Verbundleiter 20 gegenüber dem Leiter 24 eine erhöhte mechanische Bruchdehnung oder eine erhöhte mechanische Zugspannung aufweisen.

**Fig. 4** zeigt einen Verbundleiter 25 nicht gemäß der Erfindung, bei dem eine Struktureinrichtung als Mantelschicht 27 ausgebildet ist. Die Mantelschicht 27 ist beispielsweise aus einem metallischen Werkstoff gebildet und vermittels eines galvanischen Verfahrens oder Aufschmelzen auf einen Leiter 28 zur Ausbildung des Verbundleiters 25 aufgebracht.

Ausgehend von dem in **Fig. 4** gezeigten Verbundleiter 25 ist ein Verbundleiter 29, wie in **Fig. 5** dargestellt, ausbildbar. Eine Mantelschicht 30 ist durch Diffusion der Mantelschicht 27 in den Leiter 28 ausgebildet, so dass der Werkstoff der Mantelschicht 27 in eine die Mantelschicht 30 ausbildende Legierung mit dem Werkstoff des Leiters 28 übergegangen ist. Die Mantelschicht 30 weist dabei eine bis zu einem Leiter 31 hin abnehmende oder eine in Teilen der Mantelschicht gleichmäßige Konzentration von Legierungsbestandteilen auf.

Einen Verbundleiter 32 mit einer Struktureinrichtung, welche als Seil 34 ausgebildet ist, zeigt **Fig. 6****.** Das Seil 34 ist aus einer Mehrzahl von Drähten 35 ausgebildet. Die Drähte 35 können beispielsweise aus einem zugfesten Stahl und der das Seil 34 umgebende Leiter 36 kann aus Kupfer bestehen.

**Fig. 7** zeigt einen Verbundleiter 37, welcher vermittels Ätztechnik auf einem Antennensubstrat 38 ausgebildet ist. Eine Struktureinrichtung 39 des Verbundleiters 37 ist in Form eines Teilchenverbundes bzw. eines Legierungsbestandteiles eines Leiters 40 analog zur Beschreibung der **Fig. 3** ausgebildet. Im Unterschied zu **Fig. 3** ist der Verbundleiter 37 mit einem Rechteckquerschnitt 41 als Leiterbahn ausgebildet.

Ein Verbundleiter 42 nicht gemäβ der Erfindung auf dem Antennensubstrat 38 mit einer einen Leiter 43 teilweise umgebenden Mantelschicht 44 zeigt **Fig. 8****.** Die Mantelschicht 44 umgibt den Leiter 43 nicht vollständig, da die Mantelschicht 44 erst nach Ausbildung des Leiters 43 auf dem Antennensubstrat 38 auf den Leiter 43 durch ein galvanisches Verfahren oder Aufschmelzen aufgebracht wurde.

Einen Verbundleiter 45 mit einer in einem Diffusionsverfahren ausgebildeten Mantelschicht 46 zeigt **Fig. 9**. Die Ausbildung der Mantelschicht 46 erfolgt analog zu der in **Fig. 5** beschriebenen Ausbildung der Mantelschicht 30 unter Verwendung des Leiters 43 mit der Mantelschicht 44. Die Mantelschicht 46 umgibt daher einen Leiter 47 nicht vollständig, da eine Seitenfläche des Leiters 47 vom dem Antennensubstrat 38 abgedeckt ist.

Hier nicht gezeigt ist ein Verbundleiter auf einem Antennensubstrat mit einer den Verbundleiter vollständig umgebenden Mantelschicht. Zur Ausbildung dieses Verbundleiters wird zunächst auf das Antennensubstrat ein Mantelschichtwerkstoff aufgebracht, dann ein Leiterwerkstoff und abschließend der den Leiter dann umgebende Mantelschichtwerkstoff. Nachfolgend kann ein Diffusionsverfahren zur Ausbildung einer legierten Mantelschicht durchgeführt werden.

## Patentansprüche

1. Transpondereinheit (10) für Transponderkarten, mit zumindest einem Chip (15) und zumindest einer Antenne (11), wobei die Antenne aus einem Verbundleiter (12, 20, 29, 32, 37, 42, 45) gebildet ist, der auf einem Antennensubstrat (14, 38) angeordnet und mit diesem fest verbunden ist,
**dadurch gekennzeichnet,**
**dass** der Verbundleiter besteht aus
a) einem Leiter (31) aus einem ersten Metall mit einer Mantelschichf (30), welche bis zu dem Leiter hin eine abnehmende Konzentration von Legierungsbestandteilen aufweist, oder
b) einem Leiter (31) aus einem ersten Metall mit einer Mantelschicht (30), welche eine gleichmäßige Konzentration von Legierungsbestandteilen aufweist, oder
c) einem Seil (34), welches aus einer Mehrzahl von Drähten (35) aus einem ersten Metall ausgebildet ist, und einem das Seil umgebenden Leiter aus einem zweiten Metall, oder
aus einem metallischen Leiter (24) mit darin einer Mehrzahl von Teilchen (23) eines Legierungsstoffes.

## Claims

1. A transponder unit (10) for transponder cards, having at least one chip (15) and at least one antenna (11), wherein said antenna is formed from a composite conductor (12, 20, 29, 32, 37, 42, 45) which is arranged on an antenna substrate (14, 38) and is permanently connected to the latter,
**characterized in that**
said composite conductor is composed of
(a) a conductor (31) consisting of a first metal and having a cover layer (30) comprising a concentration of alloy components which diminishes up to said conductor, or
(b) a conductor (31) consisting of a first metal and having a cover layer (30) comprising a uniform concentration of alloy components, or
(c) a rope (34) formed from a plurality of wires (35) consisting of a first metal and a conductor consisting of a second metal and surrounding the rope, or
a metallic conductor (24) comprising a plurality of components (23) of an alloy material.

## Revendications

1. Unité de transpondeur (10) pour des cartes de transpondeur, présentant au moins une puce (15) et au moins une antenne (11), ladite antenne étant formée d'un conducteur composite (12, 20, 29, 32, 37, 42, 45) qui est agencé sur un substrat d'antenne (14, 38) et qui est fixé solidement à celui-ci,
**caractérisée en ce que**
le conducteur composite est constitué par
a) un conducteur (31) composé d'un premier métal et présentant une couche de revêtement (30) contenant une concentration en composants d'alliage diminuant jusqu'au conducteur, ou
b) un conducteur (31) composé d'un premier métal et présentant une couche de revêtement (30) contenant une concentration uniforme en composants d'alliage, ou
c) une corde (34) formée d'une pluralité de fils (35) composés d'un premier métal et un conducteur composé d'un second métal et entourant la corde, ou
un conducteur métallique (24) comprenant une pluralité de composants (23) d'un matériau d'alliage.
